# EUROPEAN PATENT SPECIFICATION

(11) **EP 4 382 681 B1**
(45) Date of publication and mention of the grant of the patent: **23.09.2026**
(21) Application number: 22212576.7
(22) Date of filing: 09.12.2022
(51) Int. Cl.: E02F 9/26, E02F 9/20

(54) **CONTROLLING A STATE OF AT LEAST ONE OPERATION ZONE FOR A MINING VEHICLE**
STEUERUNG EINES ZUSTANDS VON MINDESTENS EINER BETRIEBSZONE FÜR EIN BERGBAUFAHRZEUG
COMMANDE D'UN ÉTAT D'AU MOINS UNE ZONE D'OPÉRATION D'UN VÉHICULE MINIER

(43) Date of publication of application: 12.06.2024
(73) Proprietor: Sandvik Mining and Construction Oy, 33330 Tampere (FI)
(72) Inventor: CUMINI, Lauso, 33330 Tampere (FI); VAARA, Juho, 33330 Tampere (FI); HEIKKILÄ, Janne, 33330 Tampere (FI)
(74) Representative: Sandvik

(56) References cited:
- EP-A1- 3 040 508
- WO-A1-2015/187081
- SE-C2- 544 397
- US-A1- 2021 232 155

## Description

### TECHNICAL FIELD

The present application relates generally to controlling a state of at least one operation zone. More specifically, the present application relates to controlling a state of at least one operation zone of a mobile mining vehicle.

### BACKGROUND

Mining worksites, such as hard rock or soft rock mines or construction worksites, may comprise a variety of operation zones intended to be accessed by different types of mobile work machines, herein referred to as mobile mining vehicles.

US2021232155 discloses a method for zone passage control in an underground worksite having a plurality of operation zones for autonomously operating mobile vehicle operations includes the steps of receiving position information of at least one autonomously operating mobile vehicle in a fusion zone merged of at least a first zone and a second zone associated with a first passage control unit, and in response to detecting a mobile object by a second passage control unit associated with the first zone, performing: checking position of the at least one autonomously operating mobile vehicle, in response to an autonomously operating mobile vehicle being positioned in the second zone, preventing a control command to stop the autonomously operating mobile vehicle in the second zone, and demerging the first zone and the second zone.

EP3040508 discloses a system for zone passage control for a zone of an autonomously operating mobile object that comprises at least a set of detection units to detect at least one mobile object entering and/or exiting the zone, a set of identification units to identify the mobile object entering and/or exiting the zone, and a central controller being arranged in operational connection with the set of the detection units and with the set of the identification units. An admissibility level for a mobile object to enter the zone is determined and a control signal to stop at least one autonomously operating mobile object existing in the zone is provided in response to the determined admissibility level being negative for the mobile object entered the zone.

### SUMMARY

Various aspects of examples of the invention are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect of the invention, there is provided an apparatus comprising means for performing: storing information on a first state parameter indicating that the operation zone is reserved for at least one mobile mining vehicle operating in a first mode of operation, detecting an activation point associated with the operation zone, the activation point being located outside the operation zone, determining that a position of a mobile mining vehicle operating in a second mode of operation corresponds to the activation point, and activating a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

According to a second aspect of the invention, there is provided a method comprising: storing information on a first state parameter indicating that the operation zone is reserved for at least one mobile mining vehicle operating in a first mode of operation, detecting an activation point associated with the operation zone, the activation point being located outside the operation zone, determining that a position of a mobile mining vehicle operating in a second mode of operation corresponds to the activation point, and activating a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

According to a third aspect of the invention, there is provided a computer program comprising instructions for causing an apparatus to perform at least the following: storing information on a first state parameter indicating that the operation zone is reserved for at least one mobile mining vehicle operating in a first mode of operation, detecting an activation point associated with the operation zone, the activation point being located outside the operation zone, determining that a position of a mobile mining vehicle operating in a second mode of operation corresponds to the activation point, and activating a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

According to a fourth aspect of the invention, there is provided an apparatus comprising at least one processor and at least one memory including computer program code, the at least one memory and the computer program code configured to with the at least one processor, cause the apparatus at least to: store information on a first state parameter value indicating that an operation zone is reserved for at least one mobile mining vehicle operating in a first mode of operation, detect an activation point associated with the operation zone, the activation point being located outside the operation zone, determine that a position of a mobile mining vehicle operating in a second mode of operation corresponds to the activation point, and activate a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

According to a fifth aspect of the invention, there is provided a non-transitory computer readable medium comprising program instructions for causing an apparatus to perform at least the following: storing information on a first state parameter indicating that the operation zone is reserved for at least one mobile mining vehicle operating in a first mode of operation, detecting an activation point associated with the operation zone, the activation point being located outside the operation zone, determining that a position of a mobile mining vehicle operating in a second mode of operation corresponds to the activation point, and activating a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

According to a sixth aspect of the invention, there is provided a computer readable medium comprising program instructions for causing an apparatus to perform at least the following: storing information on a first state parameter indicating that the operation zone is reserved for at least one mobile mining vehicle operating in a first mode of operation, detecting an activation point associated with the operation zone, the activation point being located outside the operation zone, determining that a position of a mobile mining vehicle operating in a second mode of operation corresponds to the activation point, and activating a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 illustrates an example of controlling a state of an operation zone;
Figure 4 illustrates another example of controlling a state of an operation zone;
Figure 5 shows an example method incorporating aspects of examples of the invention;
Figure 6 shows another example method incorporating aspects of examples of the invention;
Figure 7 illustrates a further example of controlling a state of an operation zone; and
Figure 8 illustrates a yet further example of controlling a state of an operation zone.

### DETAILED DESCRIPTION OF THE DRAWINGS

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to controlling a state of an operation zone of a mobile mining vehicle.

An operation zone of a mining vehicle is reserved for one or more mining vehicles operating in a particular mode of operation, thereby preventing mining vehicles operating in a mode other than the particular mode of operation from entering the operation zone. In other words, automated mining vehicles and manually operated mining vehicles are not allowed to operate in the operation zone at the same time, thereby improving safety. If, for example, an automated mining vehicle is operating in the operation zone and a manually operated mining vehicle enters the operation zone, the automated mining vehicle may be stopped or slowed down. However, there may be a need for a manually operated mining vehicle to operate in the operation zone reserved for automated mining vehicles or there may be a need for an automated mining vehicle to operate in the operation zone reserved for manually operated mining vehicles.

An example embodiment relates to an apparatus configured to store information on a first state parameter value indicating that an operation zone is reserved for at least one mobile mining vehicle operating in a first mode of operation, detect an activation point associated with the operation zone, the activation point being located outside the operation zone, determine that a position of a mobile mining vehicle operating in a second mode of operation corresponds to the activation point, and activate a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

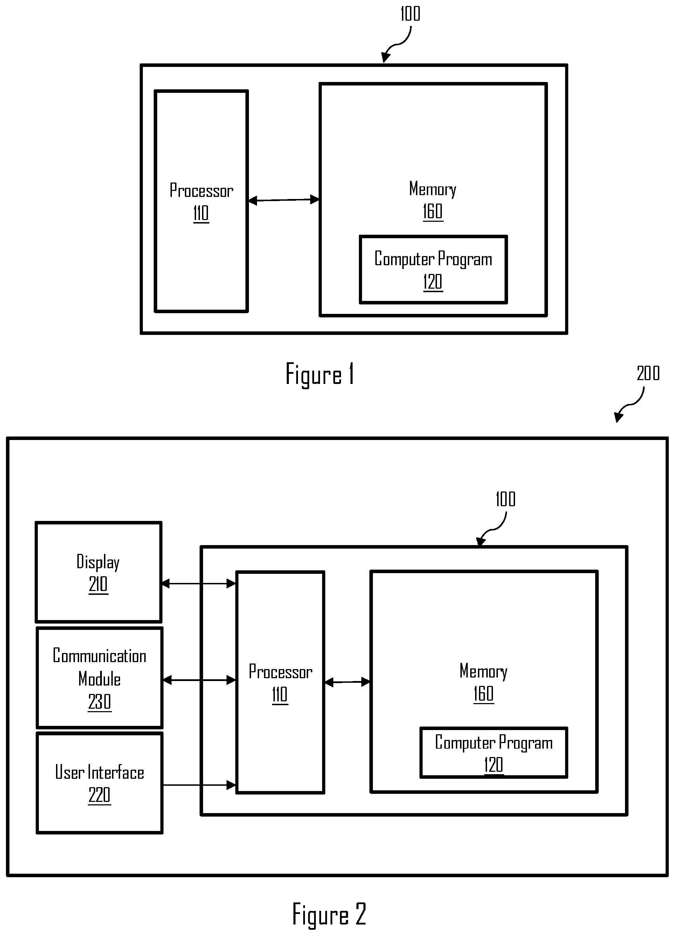

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a module comprised by an automation system or a control system, a Personal Computer (PC), a laptop, a desktop, a wireless terminal, a communication terminal, a control apparatus, a computing device or the like. In the examples below it is assumed that the apparatus 200 is a computing device such as a control apparatus for controlling a state of at least one operation zone of at least one mobile mining vehicle.

In the example embodiment of Figure 2, the apparatus 200 is illustrated as comprising the apparatus 100, a display 210, a user interface 220 for interacting with the computing device 200 and a communication module 230. The display 210 may also be configured to act as a user interface. For example, the display may be a touch screen display. In an example embodiment, the display 210 and/or the user interface 220 may be external to the apparatus 200, but in communication with it.

Additionally or alternatively, the user interface may also comprise a manually operable control such as a button, a key, a touch pad, a joystick, a stylus, a pen, a roller, a rocker, a keypad, a keyboard or any suitable input mechanism for inputting and/or accessing information.

The communication module 230 may be configured to communicate with one or more other devices such as one or more sensors, control units, work machines such as mobile mining vehicles, or the like. Communicating with one or more devices may comprise receiving information from and/or transmitting information to the one or more devices via a wired or wireless connection.

The apparatus 200 of the example of Fig. 2 may also be configured to establish radio communication with another device using, for example, a cellular network, a Bluetooth or WiFi connection, or the like.

According to an example embodiment, the apparatus 200 comprises a control apparatus for controlling a state of at least one operation zone of a mobile mining vehicle.

According to an example embodiment, the mobile mining vehicle comprises a rock drilling rig, a loader, a dumper, a load haul dump (LHD) vehicle, a ground support rig or an underground transport vehicle.

An operation zone of a mobile mining vehicle may comprise an isolated operation zone, for example, underground or above surface. An isolated operation zone may comprise a zone reserved for a particular mobile mining vehicle or mobile mining vehicles of a particular type for operating within the operation zone. Reserving an operation zone may comprise proving restricted access to the operation zone by one or more passage control units.

A passage control unit may comprise a physical access barrier for restricting access by mining vehicles to the operation zone and preventing unauthorized personnel from entering the operation zone when one or more mobile mining vehicles are operating within the operation zone. For example, a passage control unit may comprise an access barrier such as a gate. A passage control unit may further comprise at least one detection device for detecting people and/or vehicles entering and/or exiting the operation zone. A detection device may comprise, for example, a light curtain, or some other suitable detection device.

An isolated operation zone may be reserved for at least one mobile mining vehicle operating in a particular mode of operation. A mode of operation may comprise, for example, an automatic mode comprising autonomous operation of an automated mining vehicle or manual mode comprising manual operation of a mining vehicle. An isolated operation zone may, therefore, be reserved for one or more automated mining vehicles or one or more manually operated mining vehicles.

An automated mining vehicle may be configured to autonomously perform one or more tasks. An automated mining vehicle operating in an automatic mode may be configured to, for example, receive a task to be performed, perceive the environment of the mobile mining vehicle and autonomously perform the task while taking the environment into account. An automated mining vehicle operating in an automatic mode may be configured to operate independently but may be taken under external control at certain operation areas or conditions, such as during states of emergencies.

According to an example embodiment, a state of an operation zone comprises a state defining the type of a mode of operation allowed for a mobile mining vehicle within the operation zone. For example, a first state of an operation zone may indicate that the operation zone is reserved for at least one mobile mining vehicle operating in a first mode of operation and a second state of the operation zone may indicate that the operation zone is reserved for at least one mobile mining vehicle operating in a second mode of operation.

Controlling a state of at least one operation zone may comprise communicating with one or more devices. The apparatus 200 may be configured to communicate with one or more devices via a wired or wireless communication channel. Communication with the one or more devices may comprise receiving information from and/or transmitting information to the one or more devices.

According to an example embodiment, the apparatus 200 is configured to receive information relating to the operation zone. The information may comprise information on the characteristics of the operation zone, one or more mobile mining machines operating within the zone, one or more mobile mining machines about to enter or exit the operating zone, or the like.

Characteristics of the operation zone may comprise, for example, one or more parameter values associated with the operation zone. The one or more parameter values may comprise, for example, one or more state parameter values associated with the operation zone.

A state parameter associated with an operation zone may comprise, for example, a parameter defining a type of mobile mining vehicles allowed to operate within the operation zone.

According to an example embodiment, the apparatus 200 is configured to store information on a first state parameter value. The state parameter may be associated with an operating zone. For example, the state parameter may be indicative of a state of the operation zone. A state of an operation zone may comprise, for example, a state enabling autonomous operation or a state enabling manual operation within the operating zone.

The apparatus 200 may be configured to store the information on the first state parameter value, for example, in the memory 160 or some other memory operatively connected to the apparatus 200.

According to an example embodiment, the first state parameter value indicates that the operation zone is reserved for at least one mobile mining vehicle operating in a first mode of operation.

The first mode of operation may comprise, for example, manual operation or autonomous operation.

According to an example embodiment, the first mode of operation comprises manual operation.

Manual operation comprises operation of the mobile mining vehicle based on external control. Manual operation may comprise, for example, tele-remote operation of the mobile mining vehicle.

According to another example embodiment, the first mode of operation comprises autonomous operation.

Autonomous operation comprises independent operation of the mobile mining vehicle without external control. However, it should be noted that autonomously operating mobile mining vehicle may be taken under external control in particular circumstances such as at particular operation areas or conditions such as during states of emergencies.

According to an example embodiment, an operation zone is associated with an activation point for determining that a mobile mining vehicle is arriving at the operation zone. An operation zone may also be associated with another activation point for determining that a mobile mining vehicle is departing the operation zone.

An activation point may comprise a predefined position within, for example, a mining worksite such as an underground mine or a mine above the surface. An activation point may be defined in, for example, coordinates of a reference coordinate system such as a mine coordinate system or a global coordinate system, or as a position relative to an object, a landmark, a passage control unit or the like. As further example, an activation point may be defined by an operator monitoring the operation zone.

According to an example embodiment, an activation point comprises a predefined position on a route of the mobile mining vehicle. A predefined position on a route may comprise, for example, a position indicated using coordinates of a coordinate system or a position relative to a reference point such as an object, landmark, or the like. According to an example embodiment, the route comprises a predefined route.

Without limiting the scope of the claims, an advantage of an activation point being a predefined position on a route is that reaching the activation point by a mining vehicle may be determined automatically based on a position of the mobile mining vehicle.

According to an example embodiment, an activation point comprises a mechanism for requesting entry of a mobile mining vehicle to the operation zone. A mechanism for requesting entry of a mobile mining vehicle may comprise, for example, physical input device such as a button for requesting entry of the mobile mining vehicle to the operation zone. The mechanism may be located, for example, in the field or onboard the mining vehicle.

Without limiting the scope of the claims, an advantage of an activation point being a mechanism for requesting entry of a mobile mining vehicle to the operation zone is reduced processing of data to determine that a mobile mining vehicle is located at the activation point.

According to an example embodiment, the apparatus 200 is configured to receive information on an activation point associated with an operation zone. Receiving information on an activation point may comprise, for example, receiving an operator input indicating the activation point or receiving information on a predefined activation point.

According to an example embodiment, the apparatus 200 is configured to define an activation point based on an operator input or the activation point may be defined automatically, for example, within a predetermined distance from the operation zone or within a predetermined distance from the operation zone along a route of a mobile mining vehicle. An activation point may be defined for each operation zone separately, for example, upon configuring the operation zone.

Information on an activation point may comprise, for example, a position of the activation point, identification information on the activation point, or the like.

According to an example embodiment, the apparatus 200 is configured to detect an activation point associated with the operation zone, the activation point being located outside the operation zone.

Detecting an activation point may comprise, for example, identifying the activation point associated with the operation zone, determining a position of the activation point, or receiving a signal relating to the activation point associated with the operation zone. The apparatus 200 may be configured to identify an activation point based on, for example, information received about the activation point.

According to an example embodiment, the apparatus 200 is configured to determine a position of one or more mobile mining vehicles. The apparatus 200 may be configured to determine a position of a mobile mining vehicle, for example, based on position information received from the mobile mining vehicle or the apparatus 200 may be configured to track the mobile mining vehicle based on, for example, image information.

According to an example embodiment, the apparatus 200 is configured to determine that a position of a mobile mining vehicle operating in a second mode of operation corresponds to the activation point.

According to an example embodiment, the second mode of operation comprises autonomous operation.

According to another example embodiment, the second mode of operation comprises manual operation.

Determining that a position of a mobile mining vehicle corresponds to a position of an activation point may comprise, for example, comparing information on the position of the mobile mining vehicle and a position of the activation point. As another example, determining that a position of a mobile mining vehicle corresponds to a position of an activation point may comprise, for example, receiving information from one or more sensors configured to monitor the activation point.

The apparatus 200 may be configured to control the state of the operation zone by reserving and/or releasing the operation zone for at least one mining vehicle operating in a particular mode.

Reserving an operation zone may comprise preparing the operation zone such that a mobile mining vehicle operating in a particular mode of operation is allowed to operate within the operation zone and/or preventing a mobile mining vehicle operating in another operating mode from operating within the operation zone. For example, reserving an operation zone for a mobile mining vehicle operating in an automatic mode may comprise allowing the mobile mining vehicle operating in an automatic mode to enter the operation zone while preventing a mobile mining vehicle operating in a manual mode from entering the operation zone. Similarly to reserving an operation zone, releasing an operation zone may comprise preparing the operation zone such that a mobile mining vehicle operating in a particular mode of operation is allowed to operate within the operation zone and/or preventing a mobile mining vehicle operating in another operating mode from operating in the operation zone.

Reserving and releasing an operation zone may comprise a plurality of required actions and safety related confirmations. The plurality of required actions may comprise, for example, controlling one or more passage control unit associated with the operation zone and/or activating one or more surveillance devices, or the like. Safety related confirmations may comprise, for example, confirming that the operation area is empty and/or confirming that the surveillance system is activated.

Reserving and/or releasing an operation zone may comprise activating one or more pre-programmed sequences. A pre-programmed sequence may comprise a sequence of pre-programmed operations for performing at least one task such as reserving or releasing an operation zone. A sequence of pre-programmed operations may comprise, for example, a plurality of consecutive operations for reserving and/or releasing an operation zone.

According to an example embodiment, the apparatus 200 is configured to activate a vehicle arrival sequence for releasing the reserved operation zone for the mobile mining vehicle operating in the second mode of operation.

Without limiting the scope of the claims, an advantage of a vehicle arrival sequence is that an amount of manual work and, therefore, human errors may be reduced. Another advantage is that a vehicle arrival sequence may be updated when needed, thereby enabling customization of the vehicle arrival sequence based on, for example, new safety requirements.

According to an example embodiment, the first mode of operation and the second mode of operation are different modes of operation. For example, assuming the first mode on operation comprises manual operation, the second mode of operation may comprise autonomous operation. As another example, assuming the first mode of operation comprises autonomous operation, the second mode of operation may comprise manual operation.

A vehicle arrival sequence may comprise a sequence of operations that are performed by the apparatus 200 upon arrival of a mobile mining vehicle at the activation point for enabling the mobile mining machine to enter the operation zone.

A vehicle arrival sequence may comprise a sequence of operations for controlling a state of an operation zone. Controlling a state of an operation zone may comprise, for example, reserving an operation zone, releasing an operation zone, changing a state of the operation zone or maintaining a state of the operation zone.

As another example, a vehicle arrival sequence may comprise a sequence of operations that are performed by the apparatus 200 upon receiving a signal from the mechanism for requesting entry of a mobile mining vehicle to the operation zone.

A vehicle arrival sequence may be different for mobile mining vehicles operating in different operating modes. For example, a vehicle arrival sequence for a mobile mining vehicle operating in an automatic mode may be different from a vehicle arrival sequence for a mobile mining vehicle operating in a manual mode.

According to an example embodiment, the apparatus 200 is configured to receive information on a mode of operation of a mobile mining vehicle and select a vehicle arrival sequence based on the mode of operation.

Without limiting the scope of the claims, an advantage of different vehicle arrival sequences for mobile mining vehicles operating in different modes of operation is that customized control of mobile mining vehicles may be provided.

According to an example embodiment, the apparatus 200 is configured to activate the vehicle arrival sequence in response to determining that the position of the mobile mining vehicle operating in a second mode of operation corresponds to the activation point. According to another example embodiment, the apparatus 200 is configured to activate the vehicle arrival sequence in response to receiving a signal from the mechanism for requesting entry of a mobile mining vehicle to the operation zone.

The vehicle arrival sequence comprises a sequence of pre-programmed operations for releasing the reserved operation zone for the mobile mining vehicle operating in the second mode of operation.

According to an example embodiment, the vehicle arrival sequence comprises replacing the first state parameter value with a second state parameter value indicating that the operation zone is reserved for at least one mobile mining vehicle operating in the second mode of operation.

Replacing a first parameter value with a second parameter value may comprise, for example, removing the first parameter value and adding the second parameter value, deactivating the first parameter value and activating the second parameter value, updating the first parameter value with the second parameter value, or the like.

According to an example embodiment, the vehicle arrival sequence further comprises controlling a passage control unit controlling entry of a mobile mining vehicle to the operation zone. Controlling a passage control unit may comprise, for example, controlling the passage control unit such that the mobile mining vehicle is able to drive to the operation zone without the passage control unit preventing access to the operation zone. A passage control unit may comprise, for example, one or more access barriers and/or light curtains.

According to an example embodiment, the vehicle arrival sequence further comprises activating a camera configured to monitor the operation zone. The apparatus 200 may be operatively connected to the camera such that the apparatus 200 is configured to receive image information from the camera, information on a status of the camera and/or the apparatus 200 may be configured to control the camera.

According to an example embodiment, the vehicle arrival sequence further comprises confirming, based on an input received from a remote operator, that entry of the mobile mining vehicle operating in the second mode of operation into the operation zone is allowed.

The vehicle arrival sequence may comprise prompting the remote operator to confirm that entry of the mobile mining vehicle operating in the second mode of operation into the operation zone is allowed. For example, assuming the operation zone is reserved for a mobile mining vehicle operating in a manual mode and the vehicle arrival sequence is activated for a mobile mining vehicle operating in an automatic mode, the vehicle arrival sequence may comprise providing a pop-up on a user interface for the remote operator or use any other suitable way to prompt the remote operator. In this way, the remote operator may confirm that the mobile mining vehicle operating in the manual mode of operation has left the operating area. On the other hand, such a confirmation might not be needed when an arrival sequence for a mobile mining vehicle operating in a manual mode is activated.

The apparatus 200 may be configured to reserve an operation zone for a mobile mining vehicle and maintain the reservation even after departure of the mining vehicle from the operation zone.

Alternatively, the apparatus 200 may be configured to release an operation zone reserved for a mobile mining vehicle in response to the mobile mining vehicle leaving the operation zone.

According to an example embodiment, an operation zone is associated with a deactivation point for determining that a mobile mining vehicle is departing the operation zone.

A deactivation point may comprise a deactivation point dedicated for a mobile mining machine operating in a particular mode of operation such as for a mobile mining vehicle operating in an automatic mode or a mobile mining machine operating in a manual mode. Alternatively, a deactivation point may comprise a deactivation pointboth for a mobile mining vehicle operating in an automatic mode and a mobile mining machine operating in a manual mode.

Similarly to an activation point, a deactivation point may comprise a predefined position within, for example, a mining worksite such as an underground mine or a mine above the surface. A deactivation point may be defined based on, for example, coordinates of a reference coordinate system such as a mine coordinate system or a global coordinate system, or as a position relative to an object, a landmark, or the like.

According to an example embodiment, a deactivation point comprises a predefined position on a route of the mobile mining vehicle. A predefined position on a route may comprise, for example, a position indicated using coordinates of a coordinate system or a position relative to a reference point such as an object, landmark, or the like.

According to another example embodiment, a deactivation point comprises a mechanism for indicating exit of a mobile mining vehicle from the operation zone. In an example embodiment, a mechanism for indicating exit of a mobile mining vehicle may comprise, for example, physical input device such as a button for indicating the exit of the mobile mining vehicle from the operation zone. The mechanism may be located, for example, in the field or onboard the mining vehicle.

In some example embodiments, a deactivation point and/or a mechanism for indicating exit of a mobile mining vehicle is optional. In such a case, a state of the operation zone may be maintained even if the mobile mining vehicle had exited the operation zone. Alternatively, a deactivation point may be dedicated for mobile mining vehicles operating in an automatic mode or for mobile mining vehicle operating in a manual mode.

According to an example embodiment, the apparatus 200 is configured to detect a deactivation point associated with the operation zone, the deactivation point being located outside the operation zone.

Detecting a deactivation point may comprise, for example, identifying the deactivation point associated with the operation zone, determining a position of the deactivation point, or receiving a signal relating to the deactivation point associated with the operation zone. The apparatus 200 may be configured to identify a deactivation point based on, for example, information received about the deactivation point.

According to an example embodiment, the apparatus 200 is configured to reserve, in response to determining that the position of the mobile mining vehicle operating in a second mode of operation corresponds to the deactivation point, the operation zone for a mobile mining vehicle operating in the first mode of operation.

According to an example embodiment, reserving the operation zone comprises activating a vehicle departure sequence. A vehicle departure sequence may comprise a sequence of operations that are performed by the apparatus 200 upon departure of a mobile mining vehicle from the operation for enabling the mobile mining machine to exit the operation zone.

A vehicle departure sequence may comprise a sequence of operations for controlling a state of an operation zone. Controlling a state of an operation zone may comprise, for example, reserving an operation zone, releasing an operation zone, changing a state of the operation zone or maintaining a state of the operation zone.

Similarly to a vehicle arrival sequence, a vehicle departure sequence may be different for mobile mining vehicles operating in different operating modes. For example, a vehicle departure sequence for a mobile mining vehicle operating in an automatic mode may be different from a vehicle departure sequence for a mobile mining vehicle operating in a manual mode.

According to an example embodiment, the apparatus 200 is configured to receive information on a mode of operation of a mobile mining vehicle and select a vehicle departure sequence based on the mode of operation.

Without limiting the scope of the claims, an advantage of different vehicle departure sequences for mobile mining vehicles operating in different modes of operation is that customized control of mobile mining vehicles may be provided.

As another example, a vehicle departure sequence may comprise a sequence of operations that are performed by the apparatus 200 upon receiving a signal from the mechanism for requesting exit of a mobile mining vehicle from the operation zone.

According to an example embodiment, the apparatus 200 is configured to activate the vehicle departure sequence in response to determining that the position of the mobile mining vehicle operating in a second mode of operation corresponds to the deactivation point. According to another example embodiment, the apparatus 200 is configured to activate the vehicle departure sequence in response to receiving a signal from the mechanism for requesting exit of a mobile mining vehicle operating in a second mode of operation from the operation zone.

The vehicle departure sequence comprises a sequence of pre-programmed operations for releasing the reserved operation zone for the mobile mining vehicle operating in the first mode of operation.

According to an example embodiment, the vehicle departure sequence comprises controlling a passage control unit controlling exit of a mobile mining vehicle from the operation zone.

Controlling a passage control unit may comprise, for example, controlling the passage control unit such that the mobile mining vehicle is able to exit the operation zone without the passage control unit preventing departure from the operation zone. A passage control unit may comprise, for example, one or more access barriers and/or light curtains.

According to an example embodiment, the vehicle departure sequence further comprises activating a camera configured to monitor the operation zone. As explained above, the vehicle departure sequence may be different for a mobile mining vehicle operating in a first mode of operation and a second mode of operation. For example, the vehicle departure sequence for a mobile mining vehicle operating in a manual mode may comprise activating a camera while the vehicle departure sequence for a mobile mining vehicle operating in an automatic mode might not comprise activating a camera.

The apparatus 200 may be operatively connected to the camera such that the apparatus 200 is configured to receive image information from the camera, information on a status of the camera and/or the apparatus 200 may be configured to control the camera.

According to an example embodiment, the vehicle departure sequence further comprises confirming, based on an input received from a remote operator, that exit of the mobile mining vehicle operating in the second mode of operation from the operation zone is succeeded.

The vehicle departure sequence may comprise prompting the remote operator to confirm that departure of the mobile mining vehicle operating in the second mode of operation into the operation zone is allowed and/or successful. For example, the vehicle departure sequence may comprise providing a pop-up on a user interface for the remote operator or use any other suitable way to prompt the remote operator. Alternatively, the vehicle departure sequence might not require a confirmation from the remote operator. According to an example embodiment, the departure sequence comprises replacing the second state parameter value with the first state parameter value.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for storing information on a first state parameter indicating that the operation zone is reserved for at least one mobile mining vehicle operating in a first mode of operation, means for detecting an activation point associated with the operation zone, the activation point being located outside the operation zone, means for determining that a position of a mobile mining vehicle operating in a second mode of operation corresponds to the activation point, and means for activating a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

The apparatus 200 may further comprise means for detecting a position of a deactivation point associated with the operation zone, the deactivation point being located outside the operation zone and/or means for reserving, in response to determining that the position of the mobile mining vehicle operating in the second mode of operation corresponds to the deactivation point, the operation zone for a mobile mining vehicle operating in the first mode of operation.

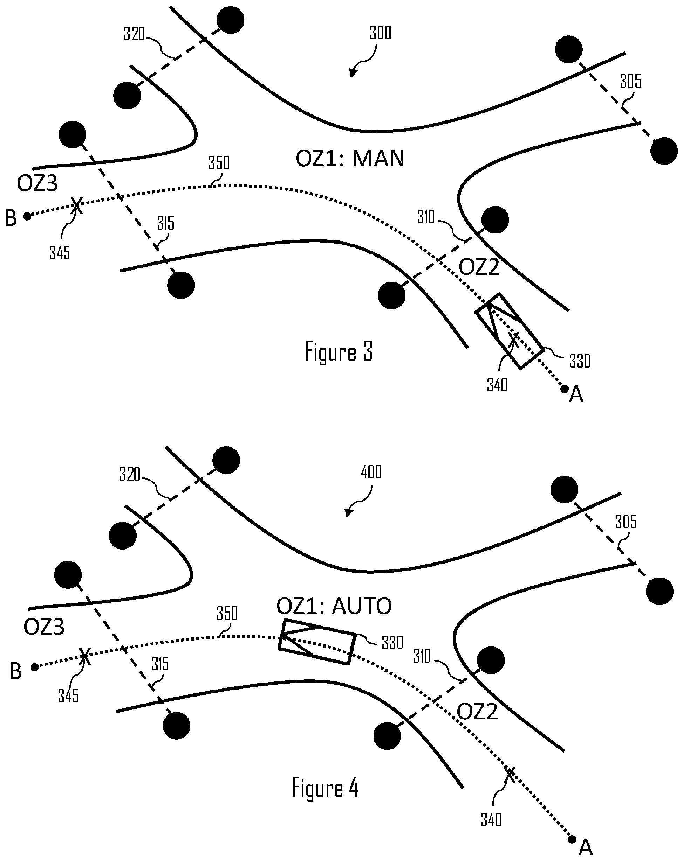

Figure 3 illustrates an example 300 of controlling a state of an operation zone (OZ). In the example the mining site comprises a first operation zone (OZ1), a second operation zone (OZ2) and a third operation zone (OZ3). The state of the operation zone may be controlled by the apparatus 200.

OZ1 is an isolated operation area that is separated from OZ2 using passage control unit 310 and from OZ3 using passage control unit 315. Arrival to and departure from OZ1 is also restricted using passage control units 305 and 320.

As explained above, a passage control unit may comprise a physical access barrier for restricting access by mining vehicles to the operation zone and preventing unauthorized personnel from entering the operation zone when one or more mobile mining vehicles are operating within the operation zone. A passage control unit may further comprise at least one detection device for detecting people and/or vehicles entering and/or exiting the operation zone. A detection device may comprise, for example, a light curtain, or some other suitable detection device.

As illustrated in Figure 3, OZ1 is reserved for mobile mining vehicles operating in a manual mode and, therefore, mobile mining vehicles operating in an automatic mode are not allowed to enter OZ1.

In the example of Figure 3, a mobile mining vehicle 330 operating in an automatic mode is assigned with a task to drive from point A to point B along a route 350. The route 350 goes through OZ1 that is reserved solely for mobile mining vehicles operating in a manual mode.

As illustrated in Figure 3, the operating zone OZ1 is associated with an activation point 340 and a deactivation point 345 that are both located outside OZ1. In the example of Figure 3, the activation point comprises a predefined position on the route 350. However, it should be noted that the activation point may alternatively comprise a mechanism for requesting entry of a mobile mining vehicle to the operation zone. The activation mechanism may comprise, for example, a physical button or other mechanism configured to receive a user input.

The apparatus 200 determines that a position of the mobile mining vehicle 330 corresponds to the activation point 340 and activates a vehicle arrival sequence for releasing OZ1 for the mobile mining vehicle 330.

In the example of Figure 3, the vehicle arrival sequence comprises at least replacing a state parameter value indicating that the operation zone is reserved for at least one mobile mining vehicle operating in a manual mode with a state parameter value indicating that OZ1 is reserved for at least one mobile mining vehicle operating in an automatic mode and controlling the passage control unit 310 such that the mobile mining vehicle 330 is able to enter OZ1. The apparatus 200 further controls passage control units 305, 315 and 320 based on the state parameter value indicating that OZ1 is reserved for at least one mobile mining vehicle operating in an automatic mode.

The vehicle arrival sequence may further comprise activating a camera configured to monitor the operation zone and/or confirming, based on an input received from a remote operator, that entry of the mobile mining vehicle 330 into OZ1 is allowed. The apparatus 200 may be configured to activate the camera and/or confirm that entry of the mobile mining vehicle into the operation zone is allowed before controlling the passage control unit 310 such that the mobile mining vehicle 330 is able to enter OZ1.

Figure 4 illustrates another example 400 of controlling a state of an operation zone (OZ). More specifically, Figure 4 continues the example of Figure 3 by illustrating that OZ1 is now reserved for at least one mobile mining vehicle operating in an automatic mode. Similarly to the example of Figure 3, the state of the operation zone may be controlled by the apparatus 200.

In the example of Figure 4, when the mobile mining vehicle 330 leaves OZ1 the apparatus 200 determines that a position of the mobile mining vehicle 330 corresponds to the deactivation point 345 and activates a vehicle departure sequence for again reserving OZ1 for mobile mining vehicles operating in a manual mode.

In the example of Figure 4, the vehicle departure sequence comprises at least controlling the passage control unit 315 such that the mobile mining vehicle 330 is able to exit OZ1. The apparatus 200 further controls passage control units 305, 315 and 320 based on the state parameter value indicating that OZ1 is reserved for at least one mobile mining vehicle operating in an automatic mode.

The vehicle departure sequence may further comprise replacing a state parameter value indicating that the operation zone is reserved for at least one mobile mining vehicle operating in an automatic mode with a state parameter value indicating that OZ1 is reserved for at least one mobile mining vehicle operating in a manual mode.

The vehicle departure sequence may further comprise activating a camera configured to monitor the operation zone and/or confirming, based on an input received from a remote operator, that exit of the mobile mining vehicle 330 from OZ1 is succeeded. The apparatus 200 may be configured to activate the camera and/or confirm that exit of the mobile mining vehicle from the operation zone is succeeded after controlling the passage control unit 310 such that the mobile mining vehicle 330 is able to exit OZ1.

Even if Figure 4 illustrates activating a vehicle departure sequence, the apparatus 200 may alternatively, be configured to maintain the state of OZ1 such that mobile mining vehicles operating in an automatic mode are allowed to enter OZ1 until otherwise instructed. In other words, assuming a mobile mining vehicle operating in an automatic mode has left the operation zone and a mobile mining vehicle operating in a manual mode needs to enter the operation zone, the mobile mining vehicle operating in a manual mode needs to request entry of the mobile mining vehicle to the operation zone.

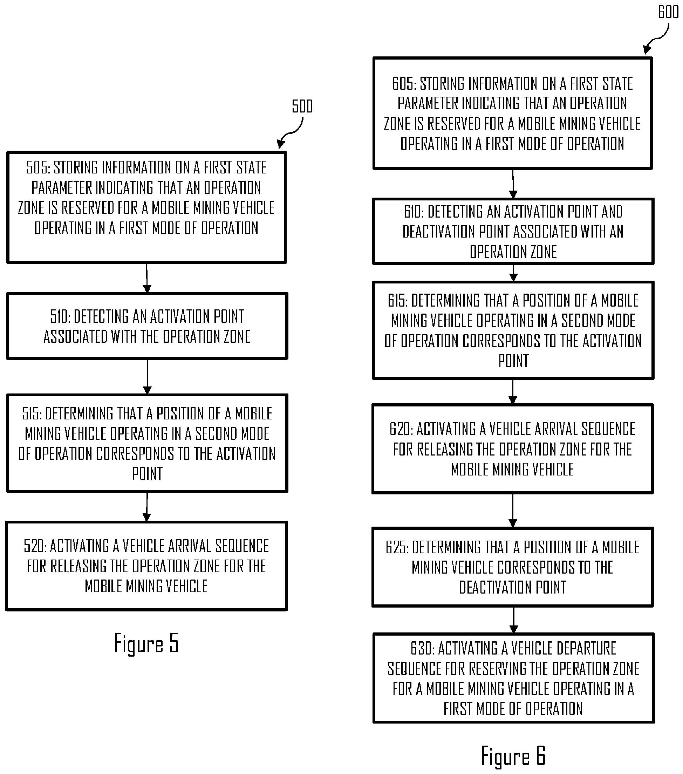

Figure 5 illustrates an example method 500 incorporating aspects of the previously disclosed embodiments. More specifically, the example method 500 illustrates controlling a state of an operation zone. The method may comprise a computer-implemented method performed by the apparatus 200.

The method starts with storing 505 information on a first state parameter value indicating that the operation zone is reserved for at least one mobile mining vehicle operating in a first mode of operation.

A state may comprise, for example, a parameter defining a type of mobile mining vehicles allowed to operate within the operation zone.

The method continues with detecting 510 an activation point associated with the operation zone, the activation point being located outside the operation zone.

Detecting an activation point may comprise, for example, identifying the activation point associated with the operation zone, determining a position of the activation point, or receiving a signal relating to the activation point associated with the operation zone. The apparatus 200 may be configured to identify an activation point based on, for example, information received about the activation point.

The method further continues with determining 515 that a position of a mobile mining vehicle operating in a second mode of operation corresponds to the activation point.

Determining that a position of a mobile mining vehicle corresponds to a position of an activation point may comprise, for example, comparing information on the position of the mobile mining vehicle and a position of the activation point. As another example, determining that a position of a mobile mining vehicle corresponds to a position of an activation point may comprise, for example, receiving information from one or more sensors configured to monitor the activation point.

The method further continues with activating 520 a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

A vehicle arrival sequence may comprise a sequence of operations that are performed by the apparatus 200 upon arrival of a mobile mining vehicle at the activation point for enabling the mobile mining machine to enter the operation zone. As another example, a vehicle arrival sequence may comprise a sequence of operations that are performed by the apparatus 200 upon receiving a signal from the mechanism for requesting entry of a mobile mining vehicle to the operation zone.

Figure 6 illustrates another example method 600 incorporating aspects of the previously disclosed embodiments. More specifically, the example method 600 illustrates providing control information. The method may comprise a computer-implemented method performed by the apparatus 200.

The method starts with storing 605 information on a first state parameter value indicating that the operation zone is reserved for at least one mobile mining vehicle operating in a first mode of operation.

A state may comprise, for example, a parameter defining a type of mobile mining vehicles allowed to operate within the operation zone.

The method continues with detecting 610 an activation point and a deactivation point associated with the operation zone, the activation point and the deactivation point being located outside the operation zone.

Detecting an activation point and a deactivation point may comprise, for example, identifying the activation point and the deactivation point associated with the operation zone, determining a position of the activation point and the deactivation point, or receiving a signal relating to the activation point and/or the deactivation point associated with the operation zone. The apparatus 200 may be configured to identify an activation point and deactivation based on, for example, information received about the activation point.

The method further continues with determining 615 that a position of a mobile mining vehicle operating in a second mode of operation corresponds to the activation point.

Determining that a position of a mobile mining vehicle corresponds to a position of an activation point may comprise, for example, comparing information on the position of the mobile mining vehicle and a position of the activation point. As another example, determining that a position of a mobile mining vehicle corresponds to a position of an activation point may comprise, for example, receiving information from one or more sensors configured to monitor the activation point.

The method further continues with activating 620 a vehicle arrival sequence for releasing the reserved operation zone for the mobile mining vehicle operating in the second mode of operation, the vehicle arrival sequence comprising replacing the first state parameter value with a second state parameter value indicating that the operation zone is reserved for at least one mobile mining vehicle operating in the second mode of operation, wherein the first mode of operation and the second mode of operation are different modes of operation.

A vehicle arrival sequence may comprise a sequence of operations that are performed by the apparatus 200 upon arrival of a mobile mining vehicle at the activation point for enabling the mobile mining machine to enter the operation zone. As another example, a vehicle arrival sequence may comprise a sequence of operations that are performed by the apparatus 200 upon receiving a signal from the mechanism for requesting entry of a mobile mining vehicle to the operation zone.

The method further continues with determining 625 that a position of a mobile mining vehicle operating in a second mode of operation corresponds to the activation point and activating 630 a vehicle departure sequence for reserving the operation zone for a mobile mining vehicle operating in the first mode of operation.

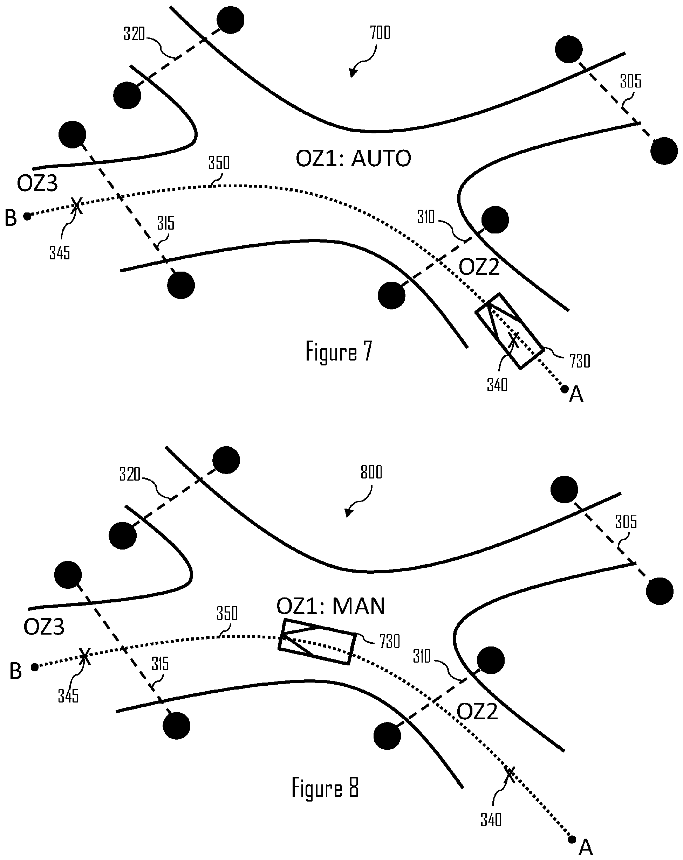

Figure 7 illustrates an example 700 of controlling a state of an operation zone (OZ). In the example the mining site comprises a first operation zone (OZ1), a second operation zone (OZ2) and a third operation zone (OZ3). The state of the operation zone may be controlled by the apparatus 200.

OZ1 is an isolated operation area that is separated from OZ2 using passage control unit 310 and from OZ3 using passage control unit 315. Arrival to and departure from OZ1 is also restricted using passage control units 305 and 320.

As explained above, a passage control unit may comprise a physical access barrier for restricting access by mining vehicles to the operation zone and preventing unauthorized personnel from entering the operation zone when one or more mobile mining vehicles are operating within the operation zone. A passage control unit may further comprise at least one detection device for detecting people and/or vehicles entering and/or exiting the operation zone. A detection device may comprise, for example, a light curtain, or some other suitable detection device.

As illustrated in Figure 7, OZ1 is reserved for mobile mining vehicles operating in an automatic mode and, therefore, mobile mining vehicles operating in a manual mode are not allowed to enter OZ1.

In the example of Figure 7, a mobile mining vehicle 730 operating in a manual mode is assigned with a task to drive from point A to point B along a route 350. The route 350 goes through OZ1 that is reserved solely for mobile mining vehicles operating in an automatic mode.

As illustrated in Figure 7, the operating zone OZ1 is associated with an activation point 340 and a deactivation point 345 that are both located outside OZ1. The activation point comprises a predefined position on the route 350. In the example of 7, the activation point comprises a mechanism for requesting entry of a mobile mining vehicle to the operation zone. The activation mechanism may comprise, for example, a physical button or other mechanism configured to receive a user input for requesting access to an operation zone.

The apparatus 200 determines that a position of the mobile mining vehicle 730 corresponds to the activation point 340 in response to receiving a request for accessing OZ1 and activates a vehicle arrival sequence for releasing OZ1 for the mobile mining vehicle 730. As explained above, the vehicle arrival sequence for a mobile mining vehicle 730 operating in a manual mode may be different from a vehicle arrival sequence for a mobile mining vehicle operating in an automatic mode.

In the example of Figure 7, the vehicle arrival sequence comprises at least replacing a state parameter value indicating that the operation zone is reserved for at least one mobile mining vehicle operating in an automatic mode with a state parameter value indicating that OZ1 is reserved for at least one mobile mining vehicle operating in a manual mode and controlling the passage control unit 310 such that the mobile mining vehicle 730 is able to enter OZ1. The apparatus 200 further controls passage control units 305, 315 and 320 based on the state parameter value indicating that OZ1 is reserved for at least one mobile mining vehicle operating in a manual mode.

In some examples, the vehicle arrival sequence may further comprise activating a camera configured to monitor the operation zone and/or confirming, based on an input received from a remote operator, that entry of the mobile mining vehicle 730 into OZ1 is allowed.

Figure 8 illustrates another example 800 of controlling a state of an operation zone (OZ). More specifically, Figure 8 continues the example of Figure 7 by illustrating that OZ1 is now reserved for at least one mobile mining vehicle operating in a manual mode. Similarly to the example of Figure 7, the state of the operation zone may be controlled by the apparatus 200.

In the example of Figure 8, when the mobile mining vehicle 730 leaves OZ1, the state of the operation zone is maintained so that the operation zone continues to be reserved for mobile mining vehicles operating in a manual mode. Alternatively, a vehicle departure sequence may be activated. Without limiting the scope of the claims, an advantage of controlling a state of at least one operation zone when it is detected that a position of a mobile mining vehicle corresponds to an activation point is that the state of the operation zone may be dynamically changed, thereby reducing the amount of time spent for waiting to be able to enter an operation zone.

Without in any way limiting the scope, interpretation, or application of the claims appearing below, a technical effect of one or more of the example embodiments disclosed herein is that mobile mining vehicles may operate with less interruptions thereby enabling more efficient operation.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in FIGURE 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the the dependent claims with the features of the independent claims.

It will be obvious to a person skilled in the art that, as the technology advances, the inventive concept can be implemented in various ways. The invention and its embodiments are not limited to the examples described above but may vary within the scope of the claims.

## Claims

1. A control apparatus (100, 200) for controlling a state of at least one operation zone of at least one mobile mining vehicle (330, 730), the apparatus (100, 200) comprising at least one processor (110) and at least one memory (160) including computer program code (120), the at least one memory (160) and the computer program code (120) configured to with the at least one processor (110), cause the apparatus (100, 200) at least to:
store information on a first state parameter value indicating that an operation zone is reserved for at least one mobile mining vehicle (330, 730) operating in a first mode of operation;
detect an activation point (340) associated with the operation zone for determining that a mobile mining vehicle (330, 730) is arriving at the operation zone, the activation point (340) being located outside the operation zone;
determine that a position of a mobile mining vehicle (330, 730) operating in a second mode of operation corresponds to the activation point (340); and
activate a vehicle arrival sequence for releasing the reserved operation zone for the mobile mining vehicle (330, 730) operating in the second mode of operation, the vehicle arrival sequence comprising replacing the first state parameter value with a second state parameter value indicating that the operation zone is reserved for at least one mobile mining vehicle (330, 730) operating in the second mode of operation, wherein the first mode of operation and the second mode of operation are different modes of operation.

2. The apparatus (100, 200) according to claim 1, wherein the vehicle arrival sequence further comprises controlling a passage control unit (305, 310, 315, 320) controlling entry of a mobile mining vehicle (330, 730) to the operation zone.

3. The apparatus (100, 200) according to claim 1 or 2, wherein the vehicle arrival sequence further comprises activating a camera configured to monitor the operation zone.

4. The apparatus (100, 200) according to any preceding claim, wherein the vehicle arrival sequence further comprises confirming, based on an input received from a remote operator, that entry of the mobile mining vehicle (330, 730) operating in the second mode of operation into the operation zone is allowed.

5. The apparatus (100, 200) according to any preceding claim, wherein the at least one memory (160) and the computer program code (120) are configured to with the at least one processor (110), cause the apparatus to detect a deactivation point (345) associated with the operation zone, the deactivation point (345) being located outside the operation zone.

6. The apparatus (100, 200) according to claim 5, wherein the at least one memory (160) and the computer program code (120) are configured to with the at least one processor (110), cause the apparatus to reserve, in response to determining that the position of the mobile mining vehicle (330, 730) operating in the second mode of operation corresponds to the deactivation point (345), the operation zone for a mobile mining vehicle (330, 730) operating in the first mode of operation.

7. The apparatus (100, 200) according to claim 6, wherein reserving the operation zone comprises activating a vehicle departure sequence.

8. The apparatus (100, 200) according to claim 7, wherein the vehicle departure sequence comprises controlling a passage control unit (305, 310, 315, 320) controlling exit of a mobile mining vehicle (330, 730) from the operation zone.

9. The apparatus (100, 200) according to claim 7 or 8, wherein the vehicle departure sequence further comprises activating a camera configured to monitor the operation zone.

10. The apparatus (100, 200) according any of claims 6 to 9, wherein the vehicle departure sequence further comprises confirming, based on an input received from a remote operator, that exit of the mobile mining vehicle (330, 730) operating in the second mode of operation from the operation zone is succeeded.

11. The apparatus (100, 200) according to any of claims 7 to 10, wherein the departure sequence comprises replacing the second state parameter value with the first state parameter value.

12. The apparatus (100, 200) according to any preceding claim, wherein the first mode of operation comprises manual operation and the second mode of operation comprises autonomous operation, or the first mode of operation comprises autonomous operation and the second mode operation comprises manual operation.

13. The apparatus (100, 200) according to any preceding claim, wherein the activation point (340) comprises a predefined position on a route (350) of the mobile mining vehicle (330, 730) or a mechanism for requesting entry of a mobile mining vehicle (330, 730) to the operation zone.

14. A method comprising:
storing (505) information on a first state parameter indicating that the operation zone is reserved for at least one mobile mining vehicle (330, 730) operating in a first mode of operation;
detecting (510) an activation point (340) associated with the operation zone for determining that a mobile mining vehicle (330, 730) is arriving at the operation zone, the activation point (340) being located outside the operation zone;
determining (515) that a position of a mobile mining vehicle (330, 730) operating in a second mode of operation corresponds to the activation point (340); and
activating (520) a vehicle arrival sequence for releasing the reserved operation zone for the mobile mining vehicle (330, 730) operating in the second mode of operation, the vehicle arrival sequence comprising replacing the first state parameter value with a second state parameter value indicating that the operation zone is reserved for at least one mobile mining vehicle (330, 730) operating in the second mode of operation, wherein the first mode of operation and the second mode of operation are different modes of operation.

15. A computer program (120) comprising instructions for causing an apparatus to perform at least the following:
storing information on a first state parameter value indicating that the operation zone is reserved for at least one mobile mining vehicle (330, 730) operating in a first mode of operation;
detecting an activation point (340) associated with the operation zone for determining that a mobile mining vehicle (330, 730) is arriving at the operation zone, the activation point (340) being located outside the operation zone;
determining that a position of a mobile mining vehicle (330, 730) operating in a second mode of operation corresponds to the activation point (340); and
activating a vehicle arrival sequence for releasing the reserved operation zone for the mobile mining vehicle (330, 730) operating in the second mode of operation, the vehicle arrival sequence comprising replacing the first state parameter value with a second state parameter value indicating that the operation zone is reserved for at least one mobile mining vehicle (330, 730) operating in the second mode of operation, wherein the first mode of operation and the second mode of operation are different modes of operation.

## Patentansprüche

1. Steuereinrichtung (100, 200) zum Steuern eines Zustands mindestens einer Betriebszone mindestens eines mobilen Bergbaufahrzeugs (330, 730), wobei die Einrichtung (100, 200) mindestens einen Prozessor (110) und mindestens einen Speicher (160) umfasst, der Computerprogrammcode (120) einschließt, wobei der mindestens eine Speicher (160) und der Computerprogrammcode (120) so konfiguriert sind, dass sie mit dem mindestens einen Prozessor (110) bewirken, dass die Einrichtung (100, 200) mindestens Folgendes durchführt:
Speichern von Informationen über einen ersten Zustandsparameterwert, der angibt, dass eine Betriebszone für mindestens ein mobiles Bergbaufahrzeug (330, 730) reserviert ist, das in einem ersten Betriebsmodus arbeitet;
Erkennen eines Aktivierungspunkts (340), der der Betriebszone zugeordnet ist, um zu bestimmen, dass ein mobiles Bergbaufahrzeug (330, 730) in der Betriebszone eintrifft, wobei der Aktivierungspunkt (340) außerhalb der Betriebszone gelegen ist;
Bestimmen, dass die Position eines mobilen Bergbaufahrzeugs (330, 730), das in einem zweiten Betriebsmodus arbeitet, dem Aktivierungspunkt (340) entspricht; und
Aktivieren einer Fahrzeugankunftssequenz zum Freigeben der reservierten Betriebszone für das mobile Bergbaufahrzeug (330, 730), das im zweiten Betriebsmodus arbeitet, wobei die Fahrzeugankunftssequenz Ersetzen des ersten Zustandsparameterwerts durch einen zweiten Zustandsparameterwert umfasst, der angibt, dass die Betriebszone für mindestens ein mobiles Bergbaufahrzeug (330, 730) reserviert ist, das im zweiten Betriebsmodus arbeitet, wobei der erste Betriebsmodus und der zweite Betriebsmodus unterschiedliche Betriebsmodi sind.

2. Einrichtung (100, 200) nach Anspruch 1, wobei die Fahrzeugankunftssequenz weiter Steuern einer Durchfahrtssteuereinheit (305, 310, 315, 320) umfasst, die Einfahrt eines mobilen Bergbaufahrzeugs (330, 730) in die Betriebszone steuert.

3. Einrichtung (100, 200) nach Anspruch 1 oder 2, wobei die Fahrzeugankunftssequenz weiter Aktivieren einer Kamera umfasst, die zum Überwachen der Betriebszone konfiguriert ist.

4. Einrichtung (100, 200) nach einem vorstehenden Anspruch, wobei die Fahrzeugankunftssequenz weiter Bestätigen, basierend auf einer von einem Fernbediener empfangenen Eingabe, umfasst, dass Einfahrt des mobilen Bergbaufahrzeugs (330, 730), das im zweiten Betriebsmodus arbeitet, in die Betriebszone zugelassen ist.

5. Einrichtung (100, 200) nach einem vorstehenden Anspruch, wobei der mindestens ein Speicher (160) und der Computerprogrammcode (120) so konfiguriert sind, dass sie zusammen mit dem mindestens einen Prozessor (110) bewirken, dass die Einrichtung einen Deaktivierungspunkt (345) erkennt, der der Betriebszone zugeordnet ist, wobei der Deaktivierungspunkt (345) außerhalb der Betriebszone gelegen ist.

6. Einrichtung (100, 200) nach Anspruch 5, wobei der mindestens eine Speicher (160) und der Computerprogrammcode (120) so konfiguriert sind, dass sie zusammen mit dem mindestens einen Prozessor (110) bewirken, dass die Einrichtung, als Reaktion auf Bestimmen, dass die Position des mobilen Bergbaufahrzeugs (330, 730), das im zweiten Betriebsmodus arbeitet dem Deaktivierungspunkt (345) entspricht, die Betriebszone für ein mobiles Bergbaufahrzeug (330, 730), das im ersten Betriebsmodus arbeitet, reserviert.

7. Einrichtung (100, 200) nach Anspruch 6, wobei Reservieren der Betriebszone Aktivieren einer Fahrzeugabfahrtsequenz umfasst.

8. Einrichtung (100, 200) nach Anspruch 7, wobei die Fahrzeugabfahrtsequenz Steuern einer Durchfahrtssteuereinheit (305, 310, 315, 320) umfasst, die Ausfahrt eines mobilen Bergbaufahrzeugs (330, 730) aus der Betriebszone steuert.

9. Einrichtung (100, 200) nach Anspruch 7 oder 8, wobei die Abfahrtssequenz des Fahrzeugs weiter Aktivieren einer Kamera umfasst, die zum Überwachen der Betriebszone konfiguriert ist.

10. Einrichtung (100, 200) nach einem der Ansprüche 6 bis 9, wobei die Fahrzeugabfahrtsequenz weiter Bestätigen, basierend auf einer von einem Fernbediener empfangenen Eingabe, umfasst, dass Ausfahrt des mobilen Bergbaufahrzeugs (330, 730), das im zweiten Betriebsmodus arbeitet, aus der Betriebszone erfolgreich war.

11. Einrichtung (100,200) nach einem der Ansprüche 7 bis 10, wobei die Abfahrtsequenz Ersetzen des zweiten Zustandsparameterwerts durch den ersten Zustandsparameterwert umfasst.

12. Einrichtung (100, 200) nach einem vorstehenden Anspruch, wobei der erste Betriebsmodus manuellen Betrieb umfasst und der zweite Betriebsmodus autonomen Betrieb umfasst, oder der erste Betriebsmodus autonomen Betrieb umfasst und der zweite Betriebsmodus manuellen Betrieb umfasst.

13. Einrichtung (100, 200) nach einem vorstehenden Anspruch, wobei der Aktivierungspunkt (340) eine vordefinierte Position auf einer Route (350) des mobilen Bergbaufahrzeugs (330, 730) oder einen Mechanismus zum Anfordern von Einfahrt eines mobilen Bergbaufahrzeugs (330, 730) in die Betriebszone umfasst.

14. Verfahren, umfassend:
Speichern (505) von Informationen über einen ersten Zustandsparameter, der angibt, dass die Betriebszone für mindestens ein mobiles Bergbaufahrzeug (330, 730) reserviert ist, das in einem ersten Betriebsmodus arbeitet;
Erkennen (510) eines Aktivierungspunkts (340), der der Betriebszone zugeordnet ist, um zu bestimmen, dass ein mobiles Bergbaufahrzeug (330, 730) in der Betriebszone eintrifft, wobei der Aktivierungspunkt (340) außerhalb der Betriebszone gelegen ist;
Bestimmen (515), dass eine Position eines mobilen Bergbaufahrzeugs (330, 730), das in einem zweiten Betriebsmodus arbeitet, dem Aktivierungspunkt (340) entspricht; und
Aktivieren (520) einer Fahrzeugankunftssequenz zum Freigeben der reservierten Betriebszone für das mobile Bergbaufahrzeug (330, 730), das im zweiten Betriebsmodus arbeitet, wobei die Fahrzeugankunftssequenz Ersetzen des ersten Zustandsparameterwerts durch einen zweiten Zustandsparameterwert umfasst, der angibt, dass die Betriebszone für mindestens ein mobiles Bergbaufahrzeug (330, 730) reserviert ist, das im zweiten Betriebsmodus arbeitet, wobei der erste Betriebsmodus und der zweite Betriebsmodus unterschiedliche Betriebsmodi sind.

15. Computerprogramm (120), das Anweisungen umfasst, die bewirken, dass eine Einrichtung mindestens Folgendes durchführt:
Speichern von Informationen über einen ersten Zustandsparameterwert, der angibt, dass die Betriebszone für mindestens ein mobiles Bergbaufahrzeug (330, 730) reserviert ist, das in einem ersten Betriebsmodus arbeitet;
Erkennen eines Aktivierungspunkts (340), der der Betriebszone zugeordnet ist, um zu bestimmen, dass ein mobiles Bergbaufahrzeug (330, 730) in der Betriebszone eintrifft, wobei der Aktivierungspunkt (340) außerhalb der Betriebszone gelegen ist;
Bestimmen, dass eine Position eines mobilen Bergbaufahrzeugs (330, 730), das in einem zweiten Betriebsmodus arbeitet, dem Aktivierungspunkt (340) entspricht; und
Aktivieren einer Fahrzeugankunftssequenz zum Freigeben der reservierten Betriebszone für das mobile Bergbaufahrzeug (330, 730), das im zweiten Betriebsmodus arbeitet, wobei die Fahrzeugankunftssequenz Ersetzen des ersten Zustandsparameterwerts durch einen zweiten Zustandsparameterwert umfasst, der angibt, dass die Betriebszone für mindestens ein mobiles Bergbaufahrzeug (330, 730) reserviert ist, das im zweiten Betriebsmodus arbeitet, wobei der erste Betriebsmodus und der zweite Betriebsmodus unterschiedliche Betriebsmodi sind.

## Revendications

1. Appareil de commande (100, 200) destiné à commander l'état d'au moins une zone de fonctionnement d'au moins un véhicule d'extraction minière mobile (330, 730), l'appareil (100, 200) comprenant au moins un processeur (110) et au moins une mémoire (160) incluant un code de programme informatique (120), l'au moins une mémoire (160) et le code de programme informatique (120) étant configurés avec l'au moins un processeur (110), pour amener l'appareil (100, 200) au moins à :
stocker des informations sur une première valeur de paramètre d'état indiquant qu'une zone de fonctionnement est réservée à au moins un véhicule d'extraction minière mobile (330, 730) fonctionnant dans un premier mode de fonctionnement ;
détecter un point d'activation (340) associé à la zone de fonctionnement pour déterminer qu'un véhicule d'extraction minière mobile (330, 730) arrive dans la zone de fonctionnement, le point d'activation (340) étant situé à l'extérieur de la zone de fonctionnement ;
déterminer qu'une position d'un véhicule d'extraction minière mobile (330, 730) fonctionnant dans un second mode de fonctionnement correspond au point d'activation (340) ; et
activer une séquence d'arrivée de véhicule pour libérer la zone de fonctionnement réservée au véhicule d'extraction minière mobile (330, 730) fonctionnant dans le second mode de fonctionnement, la séquence d'arrivée de véhicule comprenant le remplacement de la première valeur de paramètre d'état par une seconde valeur de paramètre d'état indiquant que la zone de fonctionnement est réservée à au moins un véhicule d'extraction minière mobile (330, 730) fonctionnant dans le second mode de fonctionnement, dans lequel le premier mode de fonctionnement et le second mode de fonctionnement sont des modes de fonctionnement différents.

2. Appareil (100, 200) selon la revendication 1, dans lequel la séquence d'arrivée de véhicule comprend en outre la commande d'une unité de commande de passage (305, 310, 315, 320) commandant l'entrée d'un véhicule d'extraction minière mobile (330, 730) dans la zone de fonctionnement.

3. Appareil (100, 200) selon la revendication 1 ou 2, dans lequel la séquence d'arrivée de véhicule comprend en outre l'activation d'une caméra configurée pour surveiller la zone de fonctionnement.

4. Appareil (100, 200) selon une quelconque revendication précédente, dans lequel la séquence d'arrivée de véhicule comprend en outre la confirmation, sur la base d'une entrée reçue d'un opérateur distant, que l'entrée du véhicule d'extraction minière mobile (330, 730) fonctionnant dans le second mode de fonctionnement dans la zone de fonctionnement est autorisée.

5. Appareil (100, 200) selon une quelconque revendication précédente, dans lequel l'au moins une mémoire (160) et le code de programme informatique (120) sont configurés avec l'au moins un processeur (110) pour amener l'appareil à détecter un point de désactivation (345) associé à la zone de fonctionnement, le point de désactivation (345) étant situé à l'extérieur de la zone de fonctionnement.

6. Appareil (100, 200) selon la revendication 5, dans lequel l'au moins une mémoire (160) et le code de programme informatique (120) sont configurés avec l'au moins un processeur (110), pour amener l'appareil à réserver, en réponse à la détermination que la position du véhicule d'extraction minière mobile (330, 730) fonctionnant dans le second mode de fonctionnement correspond au point de désactivation (345), la zone de fonctionnement pour un véhicule d'extraction minière mobile (330, 730) fonctionnant dans le premier mode de fonctionnement.

7. Appareil (100, 200) selon la revendication 6, dans lequel la réservation de la zone de fonctionnement comprend l'activation d'une séquence de départ de véhicule.

8. Appareil (100, 200) selon la revendication 7, dans lequel la séquence de départ de véhicule comprend la commande d'une unité de commande de passage (305, 310, 315, 320) commandant la sortie d'un véhicule d'extraction minière mobile (330, 730) de la zone de fonctionnement.

9. Appareil (100, 200) selon la revendication 7 ou 8, dans lequel la séquence de départ de véhicule comprend en outre l'activation d'une caméra configurée pour surveiller la zone de fonctionnement.

10. Appareil (100, 200) selon l'une quelconque des revendications 6 à 9, dans lequel la séquence de départ de véhicule comprend en outre la confirmation, sur la base d'une entrée reçue d'un opérateur distant, que la sortie du véhicule d'extraction minière mobile (330, 730) fonctionnant dans le second mode de fonctionnement de la zone de fonctionnement est réussie.

11. Appareil (100,200) selon l'une quelconque des revendications 7 à 10, dans lequel la séquence de départ comprend le remplacement de la seconde valeur de paramètre d'état par la première valeur de paramètre d'état.

12. Appareil (100,200) selon une quelconque revendication précédente, dans lequel le premier mode de fonctionnement comprend un fonctionnement manuel et le second mode de fonctionnement comprend un fonctionnement autonome, ou le premier mode de fonctionnement comprend un fonctionnement autonome et le second mode de fonctionnement comprend un fonctionnement manuel.

13. Appareil (100,200) selon une quelconque revendication précédente, dans lequel le point d'activation (340) comprend une position prédéfinie sur un itinéraire (350) du véhicule d'extraction minière mobile (330, 730) ou un mécanisme pour demander l'entrée d'un véhicule d'extraction minière mobile (330, 730) dans la zone de fonctionnement.

14. Procédé comprenant :
stockage (505) d'informations sur un premier paramètre d'état indiquant que la zone de fonctionnement est réservée à au moins un véhicule d'extraction minière mobile (330, 730) fonctionnant dans un premier mode de fonctionnement ;
détection (510) d'un point d'activation (340) associé à la zone de fonctionnement pour déterminer qu'un véhicule d'extraction minière mobile (330, 730) arrive dans la zone de fonctionnement, le point d'activation (340) étant situé à l'extérieur de la zone de fonctionnement ;
détermination (515) qu'une position d'un véhicule d'extraction minière mobile (330, 730) fonctionnant dans un second mode de fonctionnement correspond au point d'activation (340) ; et
activation (520) d'une séquence d'arrivée de véhicule pour libérer la zone de fonctionnement réservée au véhicule d'extraction minière mobile (330, 730) fonctionnant dans le second mode de fonctionnement, la séquence d'arrivée de véhicule comprenant le remplacement de la première valeur de paramètre d'état par une seconde valeur de paramètre d'état indiquant que la zone de fonctionnement est réservée à au moins un véhicule d'extraction minière mobile (330, 730) fonctionnant dans le second mode de fonctionnement, dans lequel le premier mode de fonctionnement et le second mode de fonctionnement sont des modes de fonctionnement différents.

15. Programme informatique (120) comprenant des instructions pour amener un appareil à effectuer au moins le suivant :
le stockage d'informations sur une première valeur de paramètre d'état indiquant que la zone de fonctionnement est réservée à au moins un véhicule d'extraction minière mobile (330, 730) fonctionnant dans un premier mode de fonctionnement ;
la détection d'un point d'activation (340) associé à la zone de fonctionnement pour déterminer qu'un véhicule d'extraction minière mobile (330, 730) arrive dans la zone de fonctionnement, le point d'activation (340) étant situé à l'extérieur de la zone de fonctionnement ;
la détermination qu'une position d'un véhicule d'extraction minière mobile (330, 730) fonctionnant dans un second mode de fonctionnement correspond au point d'activation (340) ; et
l'activation d'une séquence d'arrivée de véhicule pour libérer la zone de fonctionnement réservée au véhicule d'extraction minière mobile (330, 730) fonctionnant dans le second mode de fonctionnement, la séquence d'arrivée de véhicule comprenant le remplacement de la première valeur de paramètre d'état par une seconde valeur de paramètre d'état indiquant que la zone de fonctionnement est réservée à au moins un véhicule d'extraction minière mobile (330, 730) fonctionnant dans le second mode de fonctionnement, dans lequel le premier mode de fonctionnement et le second mode de fonctionnement sont des modes de fonctionnement différents.
